(19) Europäisches Patentamt
European Patent Office
Office européen des brevets

(11) **EP 3 252 501 B1**

(12) **EUROPEAN PATENT SPECIFICATION**

(45) Date of publication and mention
of the grant of the patent:
**08.06.2022 Bulletin 2022/23**

(21) Application number: **16172790.4**

(22) Date of filing: **03.06.2016**

(51) International Patent Classification (IPC):
**G01S 13/86** (2006.01)   **G01S 7/41** (2006.01)
**G01S 13/931** (2020.01)

(52) Cooperative Patent Classification (CPC):
**G01S 13/931; G01S 7/415; G01S 13/867**

(54) **ENHANCED OBJECT DETECTION AND MOTION STATE ESTIMATION FOR A VEHICLE ENVIRONMENT DETECTION SYSTEM**

VERBESSERTE OBJEKTERKENNUNG UND BEWEGUNGSSTATUSSCHÄTZUNG FÜR EIN FAHRZEUGUMGEBUNGSERKENNUNGSSYSTEM

DÉTECTION D'OBJET AMÉLIORÉ ET ESTIMATION DE L'ÉTAT DE MOUVEMENT POUR UN SYSTÈME DE DÉTECTION D'ENVIRONNEMENT DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2017 Bulletin 2017/49**

(73) Proprietor: **Veoneer Sweden AB**
**447 83 Vårgårda (SE)**

(72) Inventors:
• **Kellner, Dominik**
**85221 Dachau (DE)**

• **Schneider, Nicolas**
**80634 München (DE)**

(74) Representative: **Westpatent AB**
**Almekärrsvägen 11**
**443 39 Lerum (SE)**

(56) References cited:
**EP-A1- 2 793 045**      **EP-A2- 1 460 454**
**DE-A1-102013 018 310**

**Description**

The present disclosure relates to a vehicle environment detection system arranged to detect at least one detection for objects outside a vehicle. The vehicle environment detection system comprises at least one radar system, at least one camera device and at least one processing unit. For each detection, said radar system is arranged to obtain at least one azimuth detection angle and a detected Doppler velocity component.

Today, a Doppler radar system may be mounted on a vehicle in order to detect reflections from objects in order to implement functions such as speed control and collision prevention, as well as others. In such a radar system, it is required to obtain an azimuth angle in the form of a target bearing angle, a distance with respect to the object and a relative velocity between the vehicle and the object.

Many such Doppler radar systems comprise means for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. The change in frequency from start to finish, the bandwidth, may for example be of the order of 0.5% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing.

The detected relative velocity is only obtained as a radial velocity component directed between the vehicle and the object, while other velocity components are not detected. Furthermore, a yaw rate that depends on if the object is turning is also of interest to determine.

EP 1460454 A2 discloses a system comprised in a vehicle for sensing a surrounding environment Z with a radar sensor and a stereo camera; the later measuring the transversal velocity via optical flux.

There is thus a need for a device and a method for a vehicle Doppler radar system where a two-dimensional velocity vector of a point source such as a moving direction and velocity of a pedestrian, is determined. There is also a need for a device and a method for a vehicle Doppler radar system where a full motion state of an extended object having three degrees of freedom in a plane is determined, for example moving direction, velocity and turning/yaw rate. A velocity vector comprises both velocity and direction.

Said object is achieved by means of a vehicle environment detection system according to claim 1. The vehicle environment detection system according to the invention comprises at least one radar system, at least one stereo camera device and at least one processing unit. For each radar detection, said radar system is arranged to obtain at least one azimuth detection angle with respect to an x-axis and a detected Doppler velocity component that is constituted by detected Doppler velocity with respect to the radar system. Said processing unit (5) is arranged to obtain at least one stereo camera detection from said stereo camera device, where a sum of the number of radar detections and the number of stereo camera detections is at least three. The vehicle environment detection system is arranged to calculate a two-dimensional motion state of the target object by solving the linear equation system

$$
\begin{bmatrix} v_{D1} \\ \vdots \\ v_{DN} \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix} .
$$

Here, $v_{D1} \dots v_{DN}$ are detected Doppler velocity components for each radar detection, $\theta_1 \dots \theta_N$ are detected azimuth detection angles for each radar detection, $v_{y1}' \dots v_{yM}'$ are determined velocity y-components for each stereo camera detection, $x_s$ is an x-coordinate for the radar system, $y_s$ is a y-coordinate for the radar system, $x_c$ is the x-position for said stereo camera device 4 and $x_1' \dots x_M'$ is an x-coordinate for each camera detection. For an origin of the x-axis and the y-axis, $v_{x0}$ is a velocity x-component and $v_{y0}$ is a velocity y-component for an origin velocity, and $\omega$ is an angular velocity for said origin velocity.

According to a further embodiment a processing unit is arranged to integrate all stereo camera detections independently of the radar detections, enabling the radar detections to differ from the stereo camera detections. The stereo camera device is arranged to provide x-coordinates and velocity y-components for each stereo camera detection, enabling all stereo camera detection detections to be integrated in the linear equation system.

Said object is also achieved by means of a method Z according to independent claim 5.

According to a further embodiment, the method comprises integrating all stereo camera detections independently of the radar detections, enabling the radar detections to differ from the stereo camera detections. The stereo camera device is used for providing x-coordinates and velocity y-components for each stereo camera detection, enabling all stereo camera detection detections to be integrated in the linear equation system.

According to a further embodiment, the method comprises:

- finding the largest group of detections with the same motion state, such that the object with the highest number of detections is identified at a first evaluation;
- excluding these detections in a repetitive manner such that successively the detections of all objects are identified; and
- identifying detections which do not belong to an extended object.

A number of advantages are obtained by means of the present disclosure. Mainly, a direct calculation of a complete two-dimensional motion state of an extended object is obtained in a single measurement cycle without any model assumptions. The solution is acquired directly in a linear equation system.

BRIEF DESCRIPTION OF THE DRAWINGS

The present disclosure will now be described more in detail with reference to the appended drawings, giving examples useful to understand the invention which requires a stereo camera to determine ranges therewith:

Figure 1    shows a schematic top view of a vehicle with a vehicle environment detection system according to a first example;

Figure 2    shows a first schematic top view of a vehicle environment detection system according to a second example;

Figure 3    shows a second schematic top view of a vehicle environment detection system according to the second example;

Figure 4    shows a flowchart for a method according to the present disclosure; and

Figure 5    shows a flowchart for a further method according to the present disclosure.

DETAILED DESCRIPTION

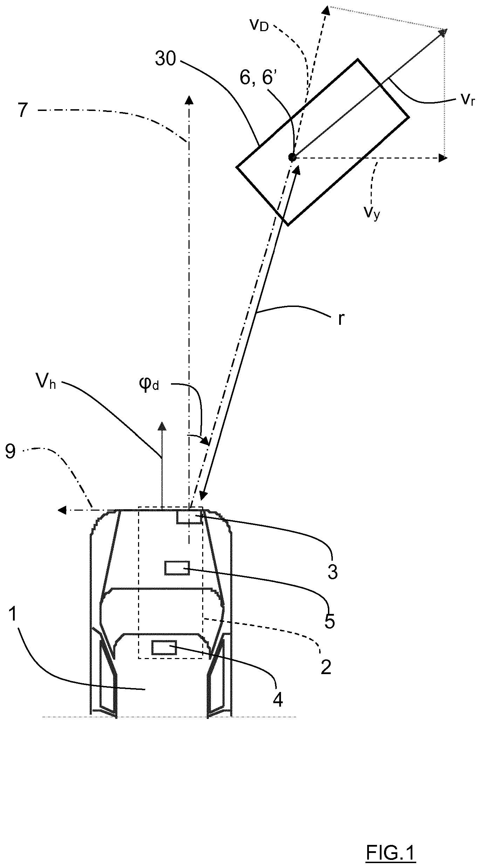

With reference to Figure 1, showing a first example, a host vehicle 1 comprises a vehicle environment detection system 2 that in turn comprises a radar system 3 and a camera device 4 and a processing unit 5. The host vehicle 1 is moving with a certain host vehicle velocity $v_h$ and there is an object 30 present in the vicinity of the vehicle's path, where the object 30 is detected at a detection 6 by the radar system 3.

The detection 6 is detected by the radar system 3 as having an azimuth detection angle $\varphi_d$ with respect to an x-axis 7 that extends from the vehicle 1 in its forward running direction, here shown extending in the same direction as the vehicle's velocity $v_h$. There is also a perpendicularly extending y-axis 9, forming a camera aperture plane axis. The detection 6 further has a certain resulting velocity $v_r$ that comprises a first velocity component $v_D$ and a second velocity component $v_y$, where the first velocity component $v_D$ is constituted by a detected Doppler velocity component and the second velocity component $v_y$ is constituted by a velocity y-component that is a projection of the resulting velocity $v_r$ onto y-axis 9. The radar system 3 is, however, not able to detect the second velocity component $v_y$. According to the present disclosure, the camera device 4 is arranged to detect an optical flow that comprises at least two frames, where the processing unit 5 is arranged to determine the second velocity component $v_y$ from said optical flow. The processing unit 5 is further arranged to determine said resulting velocity $v_r$ from the first velocity component $v_D$ and the second velocity component $v_y$.

More in detail, the radar system 3 measures the distance between the vehicle 1 and the detection 6, as well as said detection angle $\varphi_d$ and the Doppler velocity $v_D$ of the detection 6. The position of the detection 6 is converted in an image plane enabling identification of the corresponding pixel. In the image plane, the optical flow is calculated for that pixel, or a region around it. The optical flow is then transformed back in world coordinates. The motion state in the form of the resulting velocity $v_r$ for the detection is then calculated.

The camera device 5 is according to the invention a stereo camera, where a stereo camera provides a scene flow with depth information. An arbitrary number of camera devices and radar systems may of course be used. There may be one radar system with a plurality of radar sensors.

Generally, a Doppler radar system is only able to determine the first velocity component $v_D$, which is mainly equal to the longitudinal movement. A single optical flow, derived from a mono camera device, or scene flow, derived from a stereo camera device, can optional be improved with the distance/depth information provided by a radar system. This optical flow is used for a precisely estimation of the lateral motion in the image domain. Combining the acquired velocity information yields to a great improvement in accuracy and the possibility to determine the movement of a single detection 6 belonging to an object 30, for example other traffic participants, vehicles, trucks, bicycles etc. in a single measurement cycle, where at least two frames are required for the optical flow.

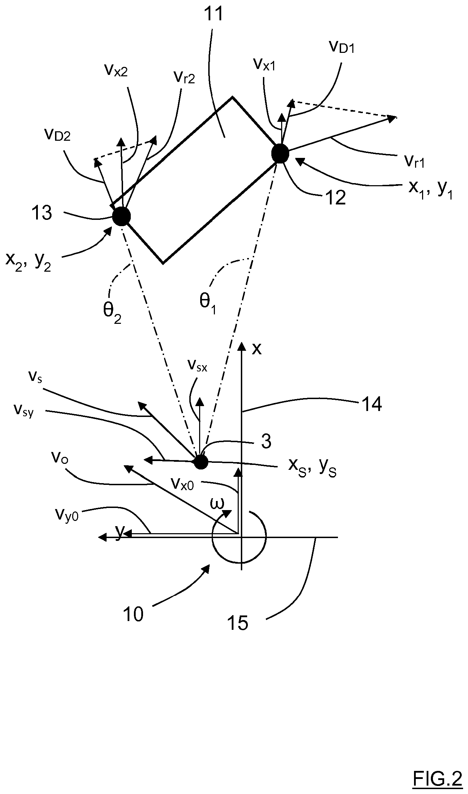

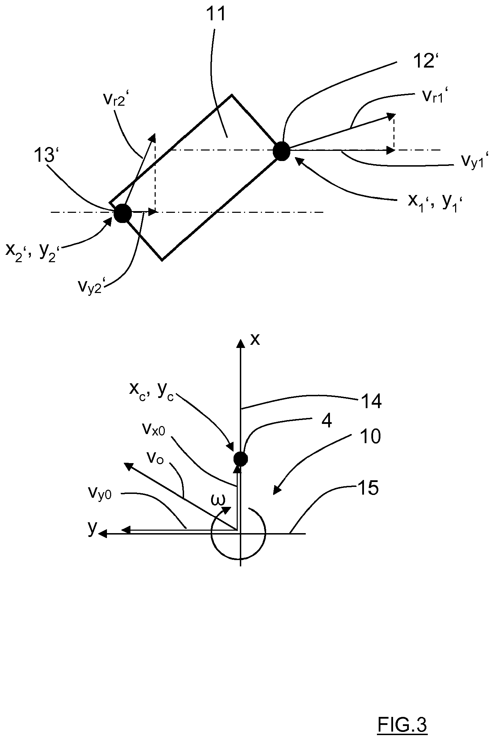

With reference to Figure 2 and Figure 3, showing a second example, a more schematical view is presented, where Figure 2 shows the positon $x_S$, $y_S$ of the radar system 3 in a coordinate system 10 having an x-axis 14 and a y-axis 15, and Figure 3 shows the positon $x_c$, $y_c$ of the camera device 4 in the coordinate system 10. In both Figure 2 and Figure 3, there is a target object 11, such as another vehicle, that is detected by the radar system 3 at two different radar detections 12, 13 and therefore constitutes an extended object. The camera device detects the target object 11 at two different camera detections 12', 13'. In this example, the radar detections 12, 13 and the camera detections 12', 13' are at the same positions, but for a stereo camera device this does not have to be the case, as will be discussed later.

A first radar detection 12 has a first radar detection position $x_1$, $y_1$ with a first detected azimuth detection angle $\theta_1$ (only schematically indicated for a line of direction in Figure 2). The first radar detection 12 also has a first resulting velocity $v_{r1}$ that comprises a first velocity x-component $v_{x1}$ and a first velocity y-component $v_{y1}$. Correspondingly, a second radar detection 13 has a second radar detection position $x_2$, $y_2$ with a second detected azimuth detection angle $\theta_2$ (only schematically indicated for a line of direction in Figure 2). Furthermore, the second radar detection 13 also has a second resulting velocity $v_{r2}$ that comprises a second velocity x-component $v_{x2}$ and a second velocity y-component $v_{y2}$.

With reference to the origin of the coordinate system, the first resulting velocity $v_{r1}$ is expressed in its components as $v_{x1}$, $v_{y1}$ as:

$$\begin{bmatrix} v_{x1} \\ v_{y1} \end{bmatrix} = \begin{bmatrix} -y_1 & 1 & 0 \\ x_1 & 0 & 1 \end{bmatrix} \begin{bmatrix} \omega \\ v_{x0} \\ v_{y0} \end{bmatrix} \quad (1).$$

where $v_{x0}$ is a velocity x-component and $v_{y0}$ is a velocity y-component for an origin velocity $v_o$ at the origin of the coordinate system 10 and $\omega$ is an angular velocity for the origin velocity $v_o$. Generally, the above equation (1) holds for an arbitrary point N on or outside the target object 11 with a known position $x_N$, $y_N$.

The full 2D motion state of the extended object 11 is expressed by means of the origin velocity vector $v_0$ at a known position and the angular velocity, yaw rate, $\omega$. As reference point, the origin of the coordinate system 10 is used in this example. Generally, any reference point can be used since the origin velocity vector $v_0$ can be transformed to any position. Equation (1) describes a transformation of the origin velocity vector $v_0$ from the origin of the coordinate system 10 to the first radar detection position $x_1$, $y_1$, and is thus independent of the positon $x_S$, $y_S$ of the radar system 3.

A radar velocity vector $v_S$ at the position $x_S$, $y_S$ of the radar system 3 with its components $v_{xS}$, $v_{yS}$ is expressed as:

$$\begin{bmatrix} v_{xS} \\ v_{yS} \end{bmatrix} = \begin{bmatrix} -y_S & 1 & 0 \\ x_S & 0 & 1 \end{bmatrix} \begin{bmatrix} \omega \\ v_{x0} \\ v_{y0} \end{bmatrix} \quad (2).$$

As shown in Figure 2, Doppler measurements using the radar system 3 provides radial detected Doppler velocity components for the detection positions; for the first detection 12 there is a first detected Doppler velocity component $v_{D1}$ and for the second detection 13 there is a second detected Doppler velocity component $v_{D2}$. The first detected Doppler velocity component $v_{D1}$ is expressed as:

$$[v_{D1}] = [\cos(\theta_1) \quad \sin(\theta_1)] \begin{bmatrix} v_{xS} \\ v_{yS} \end{bmatrix} \quad (3).$$

Combining the equations (2) and (3) for all velocity components, assuming an arbitrary number N of radar detections, results in the more general expression below:

$$\begin{bmatrix} v_{D1} \\ \vdots \\ v_{DN} \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \end{bmatrix} \begin{bmatrix} \omega \\ v_{x0} \\ v_{y0} \end{bmatrix} \quad (4).$$

As shown in Figure 3, a first camera detection 12' has a first camera detection position $x_1'$, $y_1'$ and has a first resulting velocity $v_{r1}'$ that comprises a first velocity x-component $v_{x1}'$ and a first velocity y-component $v_{y1}'$. Correspondingly, a second camera detection 13' has a second camera detection position $x_2'$, $y_2'$ and has a second resulting velocity $v_{r2}'$ that comprises a second velocity x-component $v_{x2}'$ and a second velocity y-component $v_{y2}'$. The first camera detection position $x_1'$, $y_1'$ is the sum of the measured distance by camera, optionally with support of the distance measurement by means of the radar system 3, and the camera device mounting position $x_c$, $y_c$.

The camera device 4 provides lateral velocity y-components $v_{y1}'$, $v_{y2}'$ that are projected on the y-axis by means of the optical flow. The first velocity y-component $v_{y1}'$ is expressed as:

$$\begin{bmatrix} v_{y1}' \end{bmatrix} = \begin{bmatrix} x_1' & 0 & 1 \end{bmatrix} \begin{bmatrix} \omega \\ v_{x0} \\ v_{y0} \end{bmatrix} \quad (5).$$

Combining the equations (4) and (5) for all velocity components, assuming an arbitrary number N of radar detections and an arbitrary number M of camera detections, results in:

$$\begin{bmatrix} v_{D1} \\ \vdots \\ v_{DN} \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix} \quad (6).$$

The numbers N and M may be suitably chosen, and can be equal as well as unequal. As stated previously, having the motion state $v_0$, $\omega$ at the origin, the velocity vector at any position on the object 11 can be calculated using equation (1).

Here the same principle as in the first example is used, combing radar detections with optical flow from a camera device. Here, however, multiple detections belonging to the same object are used, enabling detection of angular velocity, for example yaw rate. A direct calculation of a complete two-dimensional motion state of an extended object, without any model assumptions, is obtained in a single measurement cycle. The solution is acquired directly in the linear equation system (6).

If a linear motion state, $\omega = 0$, is assumed, e.g. on a highway, the first column of the linear equation system (6), the first row of the motion state, can be deleted. By determining only two motion parameters the accuracy is increased.

The camera device 5 , according to the invention, is a stereo camera which provides a scene flow with depth information. An arbitrary number of camera devices and radar systems may of course be used. There may be one radar system with a plurality of radar sensors.

Since a stereo camera device is used, the scene flow/optical flow of all detections of the camera device 4 can be directly integrated, instead of calculating the radar position in the image domain as in the first example. This means that all detections of the stereo camera are integrated independently of the radar detections and thus the radar detections 12, 13 can differ from the camera detections 12', 13'. A stereo camera device is able to directly provide x-coordinates $x_1'$ ... $x_M'$ and velocity y-components $v_{y1}'$ ... $v_{yM}'$ for each stereo camera detection 12', 13', enabling all detections 12', 14' to be integrated in the linear equation system (6). This means that the radar detections 12, 13 can be identical to the stereo camera detections 12', 13' as well as be different from and independent of the detections 12', 13'. The camera x-coordinate $x_c$ is mandatory.

It is thus possible to integrate all stereo camera detections 12', 13' independently of the radar detections 12, 13, enabling the radar detections 12, 13 to differ from the stereo camera detections 12', 13'. The stereo camera device 4 is arranged to provide x-coordinates $x_1' \ldots x_M'$ and velocity y-components $v_{y1}' \ldots v_{yM}'$ for each stereo camera detection 12', 13', enabling all stereo camera detection detections 12', 13' to be integrated in the linear equation system.

Considering a measurement space $v_{Dn}$, $\theta_n$, n= 1 ... N, for the Doppler radar detections, the detected Doppler velocity will ideally perform a cosine over azimuth angle for all detections. Sometimes clutter, micro Doppler or other vehicles cause a wrong Doppler measurement. By finding all detections which form a cosine by means of a robust approach such as e.g. RANSAC (Random sample consensus), all detections from a single extended object are grouped. RANSAC is a commonly known an iterative method to estimate parameters of a mathematical model from a set of observed data which contains outliers.

Correspondingly, considering another measurement space; $v_{yn}$, $x_c$, n= 1 ... N, for the camera device measurements of optical flow, the velocity y-components $v_{yn}$, the optical flow, performs a straight line over the x-position $x_c$ for the camera device 4 for all detections. Detections from the object 11 can be identified and erroneous velocities excluded, analogous to the radar case. Using the combined equation system (6), a combined fit for radar system 3 and camera device 4 is performed, so that radar information helps to identify camera detections and vice versa.

In this approach, a kinematic distance, a "velocity difference", is used to identify detections 12, 13 belonging to the same object 11. Therefore the equation system is built up and according to some aspects a Random sample consensus (RANSAC) algorithm is used to find detections from the extended object 11, due to the same motion state. RANSAC is arranged to find the largest group of detections with the same motion state, such that the object with the highest number of detections is identified at the first evaluation. These detections are excluded, and a RANSAC is performed again. Successively the detections of all objects are identified, and in the end detections which do not belong to an extended object, are identified.

In addition this approach can be used even after a segmentation step, so that all falsely segmented detections or detections with an erroneous motion state (e.g. Micro-Doppler from Radar, wrong associations from optical flow) are excluded.

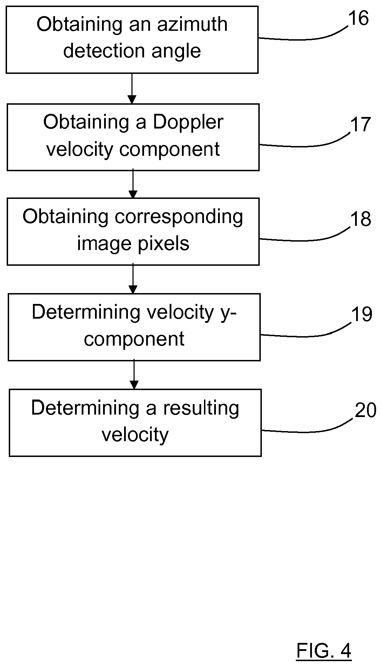

With reference to Figure 4, the present disclosure relates to a method for determining a resulting velocity $v_r$; $v_{r1}$, $v_{r2}$ for at least one detection 6; 12, 13 for objects 11 outside a vehicle 1. The method comprises:

16: Obtaining at least one azimuth detection angle $\varphi_d$, $\theta_1$, $\theta_2$ with respect to an x-axis 7, 14.
17: Obtaining a corresponding detected Doppler velocity component $v_D$; $v_{D1}$, $v_{D2}$ that is constituted by detected Doppler velocity with respect to the radar system 3.
18: Obtaining corresponding image pixels from a camera device 4 for at least two image frames, constituting an optical flow.
19: Determining a velocity y-component $v_y$; $v_{y1}$, $v_{y2}$ from said optical flow, where the velocity y-component $v_y$; $v_{y1}$, $v_{y2}$ is constituted by a projection of the resulting velocity $v_r$; $v_{r1}$, $v_{r2}$ onto a y-axis 9, 15 that extends perpendicular to the x-axis 7, 14 and forms an aperture plane axis for said camera device 4.
20: Determining the resulting velocity $v_r$; $v_{r1}$, $v_{r2}$ from the detected Doppler velocity component $v_D$; $v_{D1}$, $v_{D2}$ and the velocity y-component $v_y$; $v_{y1}$, $v_{y2}$.

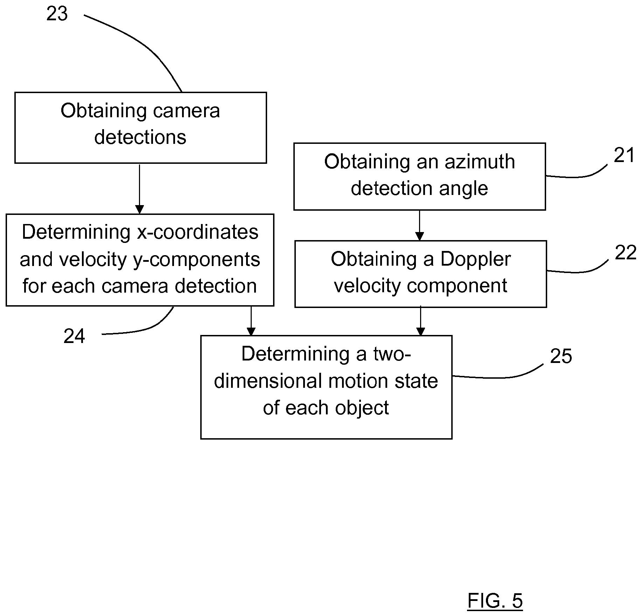

With reference to Figure 5, since a stereo camera is used, the present disclosure relates to a method for determining a two-dimensional motion state comprising an origin velocity vector $v_0$ at a known position and a corresponding angular velocity $\omega$ for at least one radar detection 12, 13 for objects 11 outside a vehicle. The method comprises:

21: Obtaining at least one radar detection azimuth detection angle $\theta_1$, $\theta_2$ with respect to an x-axis 14.
22: Obtaining a corresponding radar detection Doppler velocity component $v_{D1}$, $v_{D2}$ that is constituted by detected Doppler velocity with respect to the radar system 3.

For each of said at least one radar detection 12, 13, the method further comprises:

23: Obtaining at least one camera detection 12', 13' from a stereo camera device 4, where a sum of the number of radar detections 12, 13 and the number of camera detections 12', 13' is at least three.
24: Determining x-coordinates $x_1' \ldots x_M'$ and velocity y-components $v_{y1}' \ldots v_{yM}'$ for each stereo camera detection 12', 13'.
25: Determining a two-dimensional motion state of each object 11 by solving the linear equation system

$$\begin{bmatrix} v_{D1} \\ \vdots \\ v_{DN} \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix},$$

where $v_{D1} \ldots v_{DN}$ are detected Doppler velocity components for each radar detection 12, 13, $\theta_1 \ldots \theta_N$ are detected azimuth detection angles for each radar detection 12, 13, $v_{y1}' \ldots v_{yM}'$ are determined velocity y-components for each camera detection 12', 13', $x_s$ is an x-coordinate for the radar system 3, $y_s$ is a y-coordinate for the radar system 3, $x_c$ is the x-position for said stereo camera device 4 and $x_1' \ldots x_M'$ is an x-coordinate for each camera detection 12', 13'. For an origin of the x-axis 14 and the y-axis 15, $v_{x0}$ is a velocity x-component and $v_{y0}$ is a velocity y-component for an origin velocity $v_o$, and $\omega$ is an angular velocity for said origin velocity $v_o$.

In a further embodiment, for example, the microwave parts of the radar system 2 are assumed to be of a previously known design, and the radar system 2 comprises more parts than shown, for example a radar transmitter, a radar receiver and a receiving antenna array. The radar system 2 may furthermore comprise a number of other parts, and is for example connected to a warning and/or information device comprised in the vehicle 1 in a previously known manner.

The calculations and determining procedures are performed by the processing unit 4, where the processing unit 4 should be regarded as a processing unit arrangement that is in the form of one unit or several units that either co-operate or handle different tasks more or less independently. In the case of several units, these may be placed adjacent to each other, or in a distributed manner. A processing unit or units may be positioned at any suitable place, for example in the camera device, in the radar system or at another suitable place or places.

According to a further embodiment, the camera detections 12', 13' correspond to image pixels. The processing unit 5 is arranged to obtain at least one camera detection 12', 13' from said camera device 4. The sum of the number of radar detections 12, 13 and the number of camera detections 12', 13' is at least three.

According to a further embodiment, a vehicle environment detection system 2 is arranged to detect at least one detection 6, 6'; 12, 13; 12', 13' for at least one corresponding object 30, 11 outside a vehicle 1, the vehicle environment detection system 2 comprising at least one radar system 3, at least one camera device 4 and at least one processing unit 5, where, for each radar detection 6; 12, 13, said radar system 3 is arranged to obtain at least one azimuth detection angle $\varphi_d$, $\theta_1$, $\theta_2$ with respect to an x-axis 7, 14 and a detected Doppler velocity component $v_D$; $v_{D1}$, $v_{D2}$ that is constituted by detected Doppler velocity with respect to the radar system 3. For each detection said processing unit 5 is arranged to

- obtain corresponding camera detections 6'; 12', 13' from said camera device 4 for at least two image frames, constituting an optical flow,
- determine a velocity y-component $v_y$; $v_{y1}'$, $v_{y2}'$ from said optical flow, where the velocity y-component $v_y$; $v_{y1}'$, $v_{y2}'$ is constituted by a projection of a resulting velocity $v_r$; $V_{r1}$, $v_{r2}$; $v_{r1}'$, $v_{r2}'$ onto a y-axis 9, 15 that extends perpendicular to the x-axis 7, 14 and forms an aperture plane axis for said camera device 4, and to
- determine the resulting velocity $v_r$; $v_{r1}$, $v_{r2}$; $v_{r1}'$, $v_{r2}'$ from the detected Doppler velocity component $v_D$; $v_{D1}$, $v_{D2}$ and the velocity y-component $v_y$; $v_{y1}$, $v_{y2}$; $v_{r1}'$, $v_{r2}'$.

According to the invention for each one of said at least one radar system 3, and for each one of said at least one stereo camera device 4, the vehicle environment detection system 2 is arranged to detect a target object 11 at at least one radar detection 12, 13, each radar detection 12, 13 having a corresponding radar detection position $x_1$, $y_1$; $x_2$, $y_2$, where said processing unit 5 is arranged to obtain at least one stereo camera detection 12', 13' from said stereo camera device 4, and where a sum of the number of radar detections 12, 13 and the number of stereo camera detections 12', 13' is at least three, where furthermore the vehicle environment detection system 2 is arranged to calculate a two-dimensional motion state of the target object 11 by solving the linear equation system

$$
\begin{bmatrix} v_{D1} \\ \vdots \\ v_{DN} \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix} \,,
$$

where $v_{D1} \ldots v_{DN}$ are detected Doppler velocity components for each radar detection 12, 13, $\theta_1 \ldots \theta_N$ are detected azimuth detection angles for each radar detection 12, 13, $v_{y1}' \ldots v_{yM}'$ are determined velocity y-components for each stereo camera detection 12', 13', $x_s$ is an x-coordinate for the radar system 3, $y_s$ is a y-coordinate for the radar system 3, $x_c$ is the x-position for said stereo camera device 4 and $x_1' \ldots x_M'$ is an x-coordinate for each stereo camera detection 12',13', where furthermore, for an origin of the x-axis 14 and the y-axis 15, $v_{x0}$ is a velocity x-component and $v_{y0}$ is a velocity y-component for an origin velocity $v_o$, and $\omega$ is an angular velocity for said origin velocity $v_o$, where the two-dimensional motion state comprises the origin velocity vector $v_0$ and the corresponding angular velocity $\omega$.

According to a further embodiment, the vehicle environment detection system 2 is arranged to find the largest group of detections with the same motion state, such that the object with the highest number of detections is identified at a first evaluation, and to exclude these detections in a repetitive manner such that successively the detections of all objects are identified, and detections which do not belong to an extended object, are identified.

According to the invention the camera device is a stereo camera.

For determining a resulting velocity $v_r$; $v_{r1}$, $v_{r2}$ for at least one detection 6, 6'; 12, 13; 12', 13' for objects 11 outside a vehicle 1, the method comprises:

16: obtaining at least one radar detection azimuth detection angle $\varphi_d$, $\theta_1$, $\theta_2$ with respect to an x-axis 7, 14 using a radar system 3; and

17: obtaining a corresponding detected Doppler velocity component $v_D$; $v_{D1}$, $v_{D2}$ that is constituted by detected Doppler velocity with respect to the radar system 3.

For each detection the method further comprises:

18: obtaining corresponding camera detections 6'; 12', 13' from a camera device 4 for at least two image frames, constituting an optical flow;

19: determining a velocity y-component $v_y$; $v_{y1}$, $v_{y2}$ from said optical flow, where the velocity y-component $v_y$; $v_{y1}$, $v_{y2}$ is constituted by a projection of the resulting velocity $v_r$; $v_{r1}$, $v_{r2}$ onto a y-axis 9, 15 that extends perpendicular to the x-axis 7, 14 and forms an aperture plane axis for said camera device 4; and

20: determining the resulting velocity $v_r$; $v_{r1}$, $v_{r2}$ from the detected Doppler velocity component $v_D$; $v_{D1}$, $v_{D2}$ and the velocity y-component $v_y$; $v_{y1}$, $v_{y2}$.

The invention relates to a vehicle environment detection system 2 arranged to detect at least one radar detection 12, 13 for objects 11 outside a vehicle 1, the vehicle environment detection system 2 comprising at least one radar system 3, at least one stereo camera device 4 and at least one processing unit 5, where, for each radar detection 12, 13, said radar system 3 is arranged to obtain at least one azimuth detection angle $\varphi_d$, $\theta_1$, $\theta_2$ with respect to an x-axis 7, 14 and a detected Doppler velocity component $v_{D1}$, $v_{D2}$ that is constituted by detected Doppler velocity with respect to the radar system 3.

Said processing unit 5 is arranged to obtain at least one camera detection 12', 13' from said stereo camera device 4, and where a sum of the number of radar detections 12, 13 and the number of camera detections 12', 13' is at least three, where furthermore the vehicle environment detection system 2 is arranged to calculate a two-dimensional motion state of the target object 11 by solving the linear equation system

$$
\begin{bmatrix} v_{D1} \\ \vdots \\ v_{DN} \\ \\ v_{y1}{}' \\ \vdots \\ v_{yM}{}' \end{bmatrix}
=
\begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ \\ x_1{}' & 0 & 1 \\ \vdots & \vdots & \vdots \\ x_M{}' & 0 & 1 \end{bmatrix}
\begin{bmatrix} \omega \\ v_{x0} \\ v_{y0} \end{bmatrix} \, ,
$$

where $v_{D1}$ ... $v_{DN}$ are detected Doppler velocity components for each radar detection 12, 13, $\theta_1$ ... $\theta_N$ are detected azimuth detection angles for each radar detection 12, 13, $v_{y1}'$ ... $v_{yM}'$ are determined velocity y-components for each stereo camera detection 12', 13', $x_s$ is an x-coordinate for the radar system 3, $y_s$ is a y-coordinate for the radar system 3, $x_c$ is the x-position for said stereo camera device 4 and $x_1'$ ... $x_M'$ is an x-coordinate for each stereo camera detection 12', 13', where furthermore, for an origin of the x-axis 14 and the y-axis 15, $v_{x0}$ is a velocity x-component and $v_{y0}$ is a velocity y-component for an origin velocity $v_0$, and $\omega$ is an angular velocity for said origin velocity $v_0$, where the two-dimensional motion state comprises the origin velocity vector $v_0$ and the corresponding angular velocity $\omega$.

According to a further embodiment, the vehicle environment detection system 2 is arranged to integrate said two-dimensional motion state by means of temporal filtering.

According to a further embodiment, the vehicle environment detection system 2 is arranged to find the largest group of detections with the same motion state, such that the object with the highest number of detections is identified at a first evaluation, and to exclude these detections in a repetitive manner such that successively the detections of all objects are identified, and detections which do not belong to an extended object, are identified.

According to the invention, the camera device is a stereo camera.

According to a further embodiment, said processing unit 5 is arranged to integrate all stereo camera detections 12', 13' independently of the radar detections 12, 13, enabling the radar detections 12, 13 to differ from the stereo camera detections 12', 13', where the stereo camera device 4 is arranged to provide x-coordinates $x_1'$ ... $x_M'$ and velocity y-components $v_{y1}'$ ... $v_{yM}'$ for each stereo camera detection 12', 13', enabling all stereo camera detection detections 12', 13' to be integrated in the linear equation system.

The present invention relates to a method for determining a two-dimensional motion state comprising an origin velocity vector $v_0$ at a known position and a corresponding angular velocity $\omega$ for at least one radar detection 12, 13 for objects 11 outside a vehicle 1, where the method comprises:

21: obtaining at least one radar detection azimuth detection angle $\theta_1$, $\theta_2$ with respect to an x-axis 14; and
22: obtaining a corresponding radar detection Doppler velocity component $v_{D1}$, $v_{D2}$ that is constituted by detected Doppler velocity with respect to the radar system 3.

For each of said at least one radar detection 12, 13 the method further comprises:

23: obtaining at least one stereo camera detection 12', 13' from a stereo camera device 4, where a sum of the number of radar detections 12, 13 and the number of stereo camera detections 12', 13' is at least three;
24: determining x-coordinates $x_1'$ ... $x_M'$ and velocity y-components $v_{y1}'$ ... $v_{yM}'$ for each stereo camera detection 12', 13'; and
25: determining a two-dimensional motion state of each object 11 by solving the linear equation system

$$
\begin{bmatrix} v_{D1} \\ \vdots \\ v_{DN} \\ \\ v_{y1}{}' \\ \vdots \\ v_{yM}{}' \end{bmatrix}
=
\begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ \\ x_1{}' & 0 & 1 \\ \vdots & \vdots & \vdots \\ x_M{}' & 0 & 1 \end{bmatrix}
\begin{bmatrix} \omega \\ v_{x0} \\ v_{y0} \end{bmatrix} \, ,
$$

where $v_{D1} ... v_{DN}$ are detected Doppler velocity components for each radar detection 12, 13, $\theta_1 ... \theta_N$ are detected azimuth detection angles for each radar detection 12, 13, $v_{y1}' ... v_{yM}'$ are determined velocity y-components for each stereo camera detection 12', 13', $x_s$ is an x-coordinate for the radar system 3, $y_s$ is a y-coordinate for the radar system 3, $x_c$ is the x-position for said stereo camera device 4 and $x_1' ... x_M'$ is an x-coordinate for each stereo camera detection 12', 13', where furthermore, for an origin of the x-axis 14 and the y-axis 15, $v_{x0}$ is a velocity x-component and $v_{y0}$ is a velocity y-component for an origin velocity $v_o$, and $\omega$ is an angular velocity for said origin velocity $v_o$.

The method further comprises integrating all stereo camera detections 12', 13' independently of the radar detections 12, 13, enabling the radar detections 12, 13 to differ from the stereo camera detections 12', 13', where the stereo camera device 4 is used for providing x-coordinates $x_1' ... x_M'$ and velocity y-components $v_{y1}' ... v_{yM}'$ for each stereo camera detection 12', 13', enabling all stereo camera detection detections 12', 13' to be integrated in the linear equation system.

The method further comprises:

- finding the largest group of detections with the same motion state, such that the object with the highest number of detections is identified at a first evaluation;
- excluding these detections in a repetitive manner such that successively the detections of all objects are identified; and
- identifying detections which do not belong to an extended object.

## Claims

1. A vehicle environment detection system (2) arranged to detect at least one radar detection (12, 13) for an object (11) outside a vehicle (1), the vehicle environment detection system (2) comprising at least one radar system (3), at least one stereo camera device (4) and at least one processing unit (5), where, for each radar detection (12, 13), said radar system (3) is arranged to obtain at least one azimuth detection angle ($\varphi_d$, $\theta_1$, $\theta_2$) with respect to an x-axis (7, 14) extending from the vehicle (1) in its forward running direction, wherein an y-axis (15) extends in a direction perpendicular to the x-axis forming an x,y-coordinate system with an origin ($x_0$, $y_0$) whose position is known, and a detected Doppler velocity component ($v_{D1}$, $v_{D2}$) that is constituted by detected Doppler velocity with respect to the radar system (3), **characterized in that** said processing unit (5) is arranged to obtain at least one stereo camera detection (12', 13') from said stereo camera device (4), and where a sum of the number of radar detections (12, 13) and the number of stereo camera detections (12', 13') is at least three, where furthermore the vehicle environment detection system (2) is arranged to calculate a two-dimensional motion state of the target object (11) by solving the linear equation system

$$
\begin{bmatrix} v_{D1} \\ \vdots \\ v_{DN} \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix} ,
$$

where $v_{D1} ... v_{DN}$ are detected Doppler velocity components for each radar detection (12, 13), $\theta_1 ... \theta_N$ are detected azimuth detection angles for each radar detection (12, 13), $v_{y1}' ... v_{yM}'$ are determined velocity y-components for each stereo camera detection (12', 13'), $x_s$ is an x-coordinate of the position of the radar system (3) with respect to the origin ($x_0$,$y_0$), $y_s$ is a y-coordinate of the position of the radar system (3) with respect to the origin ($x_0$,$y_0$), $x_c$ is the x-position of the position ($x_c$, $y_c$) of said stereo camera device (4) with respect to the origin ($x_0$,$y_0$) and $x_1' ... x_M'$ is an x-coordinate for each stereo camera detection (12', 13') with respect to the origin ($x_0$, $y_0$) and $x_1' ... x_M'$ being each the sum of the respective distance measured per stereo camera detection by the stereo camera device (4)in direction of the x-axis and the x-position $x_c$ of the stereo camera device (4), where furthermore, for the origin ($x_0$, $y_0$) of the x-axis (14) and the y-axis (15), $v_{x0}$ is the velocity x-component and $v_{y0}$ is the velocity y-component for the velocity vector $v_0$ of the origin ($x_0$, $y_0$) and $\omega$ is an angular velocity of the object (11) with respect to said origin ($x_0$, $y_0$), where the two-dimensional motion state of the object (11) is expressed by means of the velocity vector $v_0$ at

the known position $(x_0, y_0)$ of the origin and the corresponding angular velocity $\omega$ of the object (11) around said origin $(x_0, y_0)$. .

2. The vehicle environment detection system (2) according to claim 1, **characterized in that** the vehicle environment detection system (2) is arranged to integrate said two-dimensional motion state by means of temporal filtering.

3. The vehicle environment detection system (2) according to claims 1 or 2, **characterized in that** the vehicle environment detection system (2) is arranged to find the largest group of detections with the same motion state, such that the object with the highest number of detections is identified at a first evaluation, and to exclude these detections in a repetitive manner such that successively the detections of all objects are identified, and detections which do not belong to an extended object, are identified.

4. The vehicle environment detection system (2) according to claim 1, **characterized in that** said processing unit (5) is arranged to integrate all stereo camera detections (12', 13') independently of the radar detections (12, 13), enabling the radar detections (12, 13) to differ from the stereo camera detections (12', 13'), where the stereo camera device (4) is arranged to provide x-coordinates $(x_1' \ldots x_M')$ and velocity y-components $(v_{y1}' \ldots v_{yM}')$ for each stereo camera detection (12', 13'), enabling all stereo camera detections (12', 13') to be integrated in the linear equation system.

5. A method for determining a two-dimensional motion state of a detected object (11) comprising a velocity vector $v_0$ at a known position $(x_0, y_0)$ of an origin and a corresponding angular velocity $\omega$ of the detected object (11) around said origin $(x_0, y_0)$ for at least one radar detection (12, 13) of the object (11) outside a vehicle (1), where the method comprises:

(21) obtaining at least one radar detection azimuth detection angle $(\theta_1, \theta_2)$ with respect to an x-axis (14) extending from the vehicle (1) in its forward running direction, wherein an y-axis (15) extends in a direction perpendicular to the x-axis forming an x,y-coordinate system with the origin being said origin $(x_0, y_0)$ whose position is known; and
(22) obtaining a corresponding radar detection Doppler velocity component $(v_{D1}, v_{D2})$ that is constituted by detected Doppler velocity with respect to the radar system (3);

**characterized in that** for each of said at least one radar detection (12, 13) the method further comprises:

(23) obtaining at least one stereo camera detection (12', 13') from a stereo camera device (4), where a sum of the number of radar detections (12, 13) and the number of stereo camera detections (12', 13') is at least three;
(24) determining x-coordinates $(x_1' \ldots x_M')$ and velocity y-components $(v_{y1}' \ldots v_{yM}')$ for each stereo camera detection (12', 13'); and
(25) determining a two-dimensional motion state of a detected object (11) by solving the linear equation system

$$
\begin{bmatrix} v_{D1} \\ \vdots \\ v_{DN} \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix},
$$

where $v_{D1} \ldots v_{DN}$ are detected Doppler velocity components for each radar detection (12, 13), $\theta_1 \ldots \theta_N$ are detected azimuth detection angles for each radar detection (12, 13), $v_{y1}' \ldots v_{yM}'$ are determined velocity y-components for each stereo camera detection (12', 13'), $x_S$ is an x-coordinate of the position of the radar system (3) with respect to the origin $(x_0, y_0)$, $y_S$ is a y-coordinate of the position of the radar system (3) with respect to the origin $(x_0, y_0)$, $x_c$ is the x-position of the position $(x_c, y_c)$ of said stereo camera device (4) with respect to the origin $(x_0, y_0)$ and $x_1' \ldots x_M'$ is an x-coordinate for each stereo camera detection (12', 13') with respect to the origin $(x_0, y_0)$ and $x_1' \ldots x_M'$ being each the sum of the respective distance measured per stereo camera detection by the stereo camera device (4) in direction of the x-axis and the x-position $x_c$ of the stereo camera device (4), where furthermore, for the origin $(x_0, y_0)$ of the x-axis (14) and the y-axis (15), $v_{x0}$ is the velocity x-component and $v_{y0}$ is the velocity y-component of the velocity vector $v_0$ of the origin $(x_0, y_0)$, and $\omega$ is an angular velocity of the object (11) with respect to said origin $(x_0, y_0)$, where the two-dimensional motion state is expressed by means of said velocity vector $v_0$ at the known position $(x_0, y_0)$ of the origin and the corresponding angular velocity $\omega$ of the object (11) around said origin $(x_0, y_0)$. .

6. A method according to claim 5 **characterized in that** the method further comprises integrating all stereo camera detections (12', 13') independently of the radar detections (12, 13), enabling the radar detections (12, 13) to differ from the stereo camera detections (12', 13'), where the stereo camera device (4) is used for providing x-coordinates $(x_1' \ldots x_M')$ and velocity y-components $(v_{y1}' \ldots v_{yM}')$ for each stereo camera detection (12', 13'), enabling all stereo camera detections (12', 13') to be integrated in the linear equation system.

7. A method according to any one of the claims 5 or 6 **characterized in that** the method further comprises:

   - finding the largest group of detections with the same motion state, such that the object with the highest number of detections is identified at a first evaluation;
   - excluding these detections in a repetitive manner such that successively the detections of all objects are identified; and
   - identifying detections which do not belong to an extended object.

**Patentansprüche**

1. Fahrzeugumgebungserfassungssystem (2), das zum Erfassen mindestens einer Radarerfassung (12, 13) für ein Objekt (11) außerhalb eines Fahrzeugs (1) eingerichtet ist, wobei das Fahrzeugumgebungserfassungssystem (2) mindestens ein Radarsystem (3), mindestens eine Stereokameravorrichtung (4) und mindestens eine Verarbeitungseinheit (5) umfasst, wobei das Radarsystem (3) bei jeder Radarerfassung (12, 13) eingerichtet ist, mindestens einen Azimuterfassungswinkel $(\varphi_d, \theta_1, \theta_2)$ in Bezug auf eine x-Achse (7, 14), die sich von dem Fahrzeug (1) in seiner Vorwärtsfahrrichtung erstreckt, wobei sich eine y-Achse (15) in einer Richtung senkrecht zu der x-Achse erstreckt, wodurch ein x-y-Koordinatensystem mit einem Ursprung $(x_0, y_0)$, dessen Position bekannt ist, gebildet wird, und eine erfasste Dopplergeschwindigkeitskomponente $(v_{D1}, v_{D2})$ zu erhalten, die durch in Bezug auf das Radarsystem (3) erfasste Dopplergeschwindigkeit erzeugt wird, **dadurch gekennzeichnet, dass** die Verarbeitungseinheit (5) eingerichtet ist, von der Stereokameravorrichtung (4) mindestens eine Stereokamera-Erfassung (12', 13') zu erhalten, und wobei eine Summe der Anzahl von Radarerfassungen (12, 13) und der Anzahl der Stereokamera-Erfassungen (12', 13') mindestens drei beträgt, wobei weiterhin das Fahrzeugumgebungserfassungssystem (2) eingerichtet ist, einen zweidimensionalen Bewegungszustand des Zielobjekts (11) durch Lösen des linearen Gleichungssystems

$$\begin{bmatrix} v_{D1} \\ \vdots \\ v_{DN} \\ \\ v_{y1}' \\ \vdots \\ v_{yM}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ \\ x_1' & 0 & 1 \\ \vdots & \vdots & \vdots \\ x_M' & 0 & 1 \end{bmatrix} \begin{bmatrix} \omega \\ v_{x0} \\ v_{y0} \end{bmatrix},$$

zu berechnen, wobei $v_{D1} \ldots v_{DN}$ erfasste Dopplergeschwindigkeitskomponenten für jede Radarerfassung (12, 13) sind, $\theta_1 \ldots \theta_N$ erfasste Azimuterfassungswinkel für jede Radarerfassung (12, 13) sind, $v_{y1}' \ldots v_{yM}'$ ermittelte y-Geschwindigkeitskomponenten für jede Stereokamera-Erfassung (12', 13') sind, $x_s$ eine x-Koordinate der Position des Radarsystems (3) in Bezug auf den Ursprung $(x_0, y_0)$ ist, $y_s$ eine y-Koordinate der Position des Radarsystems (3) in Bezug auf den Ursprung $(x_0, y_0)$ ist, $x_c$ die x-Position der Position $(xc, y_c)$ der Stereokameravorrichtung (4) in Bezug auf den Ursprung $(x_0, y_0)$ ist und $x_1' \ldots x_M'$ eine x-Koordinate für jede Stereokamera-Erfassung (12', 13') in Bezug auf den Ursprung $(x_0, y_0)$ ist, wobei $x_1' \ldots x_M'$ jeweils die Summe des jeweiligen pro Stereokamera-Erfassung durch die Stereokameravorrichtung (4) in Richtung der x-Achse gemessenen Abstands und der x-Position $x_c$ der Stereokameravorrichtung (4) ist, wobei weiterhin für den Ursprung ($x_0$, $y_0$) der x-Achse (14) und der y-Achse (15) $v_{x0}$ die x-Geschwindigkeitskomponente und $v_{y0}$ die y-Geschwindigkeitskomponente für den Geschwindigkeitsvektor $v_0$ des Ursprungs ($x_0$, $y_0$) ist und $\omega$ eine Winkelgeschwindigkeit des Objekts (11) in Bezug auf den Ursprung ($x_0$, $y_0$) ist, wobei der zweidimensionale Bewegungszustand des Objekts (11) mittels des Geschwindigkeitsvektors vo an der bekannten Position ($x_0$, $y_0$) des Ursprungs und der entsprechenden Winkelgeschwindigkeit $\omega$ des Objekts (11) um den Ursprung ($x_0$, $y_0$) ausgedrückt wird.

2. Fahrzeugumgebungserfassungssystem (2) nach Anspruch 1, **dadurch gekennzeichnet, dass** das Fahrzeugumgebungserfassungssystem (2) eingerichtet ist, den zweidimensionalen Bewegungszustand mittels zeitlicher Filterung zu integrieren.

3. Fahrzeugumgebungserfassungssystem (2) nach den Ansprüchen 1 oder 2, **dadurch gekennzeichnet, dass** das Fahrzeugumgebungserfassungssystem (2) eingerichtet ist, die größte Gruppe von Erfassungen mit dem gleichen Bewegungszustand zu finden, sodass das Objekt mit der höchsten Anzahl von Erfassungen bei einer ersten Auswertung identifiziert wird, und diese Erfassungen auf eine wiederholende Weise so auszuschließen, dass nacheinander die Erfassungen aller Objekte identifiziert werden und Erfassungen, die nicht zu einem erweiterten Objekt gehören, identifiziert werden.

4. Fahrzeugumgebungserfassungssystem (2) nach Anspruch 1, **dadurch gekennzeichnet, dass** die Verarbeitungseinheit (5) eingerichtet ist, alle Stereokamera-Erfassungen (12', 13') unabhängig von den Radarerfassungen (12, 13) zu integrieren, wodurch es möglich wird, dass die Radarerfassungen (12, 13) sich von den Stereokamera-Erfassungen (12', 13') unterscheiden, wobei die Stereokameravorrichtung (4) eingerichtet ist, x-Koordinaten ($x_1'$ ... $x_M'$) und y-Geschwindigkeitskomponenten ($v_{y1}'$ ... $v_{yM}'$) für jede Stereokamera-Erfassung (12', 13') bereitzustellen, wodurch es möglich wird, dass alle Stereokamera-Erfassungen (12', 13') in das lineare Gleichungssystem integriert werden.

5. Verfahren zum Bestimmen eines zweidimensionalen Bewegungszustands eines erfassten Objekts (11), umfassend einen Geschwindigkeitsvektor $v_0$ an einer bekannten Position ($x_0$, $y_0$) eines Ursprungs und eine entsprechende Winkelgeschwindigkeit $\omega$ des erfassten Objekts (11) um den Ursprung ($x_0$, $y_0$) für mindestens eine Radarerfassung (12, 13) des Objekts (11) außerhalb eines Fahrzeugs (1), wobei das Verfahren Folgendes umfasst:

(21) Erhalten mindestens eines Azimuterfassungswinkels ($\theta_1$, $\theta_2$) der Radarerfassung in Bezug auf eine x-Achse (14), die sich von dem Fahrzeug (1) in seiner Vorwärtsfahrrichtung erstreckt, wobei sich eine y-Achse (15) in einer Richtung senkrecht zu der x-Achse erstreckt, wodurch ein x-y-Koordinatensystem gebildet wird, wobei der Ursprung der Ursprung ($x_0$, $y_0$) ist, dessen Position bekannt ist; und
(22) Erhalten einer entsprechenden Dopplergeschwindigkeitskomponente ($v_{D1}$, $v_{D2}$) der Radarerfassung, die durch in Bezug auf das Radarsystem (3) erfasste Dopplergeschwindigkeit erzeugt wird;

**dadurch gekennzeichnet, dass** für jede der mindestens einen Radarerfassung (12, 13) das Verfahren ferner Folgendes umfasst:

(23) Erhalten mindestens einer Stereokamera-Erfassung (12', 13') von einer Stereokameravorrichtung (4), wobei eine Summe der Anzahl von Radarerfassungen (12, 13) und der Anzahl der Stereokamera-Erfassungen (12', 13') mindestens drei beträgt;
(24) Bestimmen von x-Koordinaten ($x_1'$ ... $x_M'$) und y-Geschwindigkeitskomponenten ($v_{y1}'$ ... $v_{yM}'$) für jede Stereokamera-Erfassung (12', 13'); und
(25) Bestimmen eines zweidimensionalen Bewegungszustands eines erfassten Objekts (11) durch Lösen des linearen Gleichungssystems

$$
\begin{bmatrix} v_{D1} \\ \vdots \\ v_{DN} \\ v_{y1}{}' \\ \vdots \\ v_{yM}{}' \end{bmatrix} = \begin{bmatrix} x_S\ \sin(\theta_1) - y_S\ \cos(\theta_1) & \cos(\theta_1) & \sin(\theta_1) \\ \vdots & \vdots & \vdots \\ x_S\ \sin(\theta_N) - y_S\ \cos(\theta_N) & \cos(\theta_N) & \sin(\theta_N) \\ x_1{}' & 0 & 1 \\ \vdots & \vdots & \vdots \\ x_M{}' & 0 & 1 \end{bmatrix} \begin{bmatrix} \omega \\ v_{x0} \\ v_{y0} \end{bmatrix} ,
$$

wobei $v_{D1}$ ... $v_{DN}$ erfasste Dopplergeschwindigkeitskomponenten für jede Radarerfassung (12, 13) sind, $\theta_1$ ... $\theta_N$ erfasste Azimuterfassungswinkel für jede Radarerfassung (12, 13) sind, $v_{y1}'$ ... $v_{yM}'$ ermittelte y-Geschwindigkeitskomponenten für jede Stereokamera-Erfassung (12', 13') sind, $x_s$ eine x-Koordinate der Position des Radarsystems (3) in Bezug auf den Ursprung $(x_0, y_0)$ ist, $y_s$ eine y-Koordinate der Position des Radarsystems (3) in Bezug auf den Ursprung $(x_0, y_0)$ ist, $x_c$ die x-Position der Position $(x_c, y_c)$ der Stereokameravorrichtung (4) in Bezug auf den Ursprung $(x_0, y_0)$ ist und $x_1'$ ... $x_M'$ eine x-Koordinate für jede Stereokamera-Erfassung (12', 13') in Bezug auf den Ursprung $(x_0, y_0)$ ist, wobei $x_1'$ ... $x_M'$ jeweils die Summe des jeweiligen pro Stereokamera-Erfassung durch die Stereokameravorrichtung (4) in Richtung der x-Achse gemessenen Abstands und der x-Position $x_c$ der Stereokameravorrichtung (4) ist, wobei weiterhin für den Ursprung $(x_0, y_0)$ der x-Achse (14) und der y-Achse (15) $v_{x0}$ die x-Geschwindigkeitskomponente und $v_{y0}$ die y-Geschwindigkeitskomponente des Geschwindigkeitsvektors $v_0$ des Ursprungs $(x_0, y_0)$ ist und $\omega$ eine Winkelgeschwindigkeit des Objekts (11) in Bezug auf den Ursprung $(x_0, y_0)$ ist, wobei der zweidimensionale Bewegungszustand mittels des Geschwindigkeitsvektors $v_0$ an der bekannten Position $(x_0, y_0)$ des Ursprungs und der entsprechenden Winkelgeschwindigkeit $\omega$ des Objekts (11) um den Ursprung $(x_0, y_0)$ ausgedrückt wird.

6. Verfahren nach Anspruch 5, **dadurch gekennzeichnet, dass** das Verfahren ferner das Integrieren aller Stereokamera-Erfassungen (12', 13') unabhängig von den Radarerfassungen (12, 13) umfasst, wodurch es möglich wird, dass die Radarerfassungen (12, 13) sich von den Stereokamera-Erfassungen (12', 13') unterscheiden, wobei die Stereokameravorrichtung (4) zum Bereitstellen von x-Koordinaten $(x_1'$ ... $x_M')$ und y-Geschwindigkeitskomponenten $(v_{y1}'$ ... $v_{yM}')$ für jede Stereokamera-Erfassung (12', 13') verwendet wird, wodurch es möglich wird, dass alle Stereokamera-Erfassungen (12', 13') in das lineare Gleichungssystem integriert werden.

7. Verfahren nach einem der Ansprüche 5 oder 6, **dadurch gekennzeichnet, dass** das Verfahren ferner Folgendes umfasst:

   - Finden der größten Gruppe von Erfassungen mit dem gleichen Bewegungszustand, sodass das Objekt mit der höchsten Anzahl von Erfassungen bei einer ersten Auswertung identifiziert wird;
   - Ausschließen dieser Erfassungen auf eine wiederholende Weise, sodass nacheinander die Erfassungen aller Objekte identifiziert werden; und
   - Identifizieren von Erfassungen, die nicht zu einem erweiterten Objekt gehören.

## Revendications

1. Système de détection d'environnement de véhicule (2) agencé pour détecter au moins une détection radar (12, 13) pour un objet (11) à l'extérieur d'un véhicule (1), le système de détection d'environnement de véhicule (2) comprenant au moins un système radar (3), au moins un dispositif de caméra stéréo (4) et au moins une unité de traitement (5), où, pour chaque détection radar (12, 13), ledit système radar (3) est agencé pour obtenir au moins un angle de détection d'azimut $(\varphi_d, \theta_1, \theta_2)$ par rapport à un axe x (7, 14) s'étendant à partir du véhicule (1) dans sa direction de marche avant, dans lequel un axe y (15) s'étend dans une direction perpendiculaire à l'axe x formant un système de coordonnées x,y avec une origine (xo,yo) dont la position est connue, et une composante de vitesse Doppler détectée $(v_{D1}, v_{D2})$ qui est constituée par une vitesse Doppler détectée par rapport au système radar (3), **caractérisé en ce que** ladite unité de traitement (5) est agencée pour obtenir au moins une détection de caméra stéréo (12', 13') à partir dudit dispositif de caméra stéréo (4), et où une somme du nombre de détections radar (12, 13) et du nombre de détections de caméra stéréo (12', 13') est au moins trois, où en outre le système de détection d'environnement de véhicule (2) est agencé pour calculer un état de mouvement bidimensionnel de l'objet (11) cible en résolvant le système d'équation linéaire

$$
\begin{bmatrix} v_{D1} \\ \vdots \\ v_{DN} \\ \\ v_{y1}{}' \\ \vdots \\ v_{yM}{}' \end{bmatrix} = \begin{bmatrix} x_S \, \sin(\theta_1) - y_S \, \cos(\theta_1) & \cos(\theta_1) & \sin(\theta_1) \\ \vdots & \vdots & \vdots \\ x_S \, \sin(\theta_N) - y_S \, \cos(\theta_N) & \cos(\theta_N) & \sin(\theta_N) \\ \\ x_1{}' & 0 & 1 \\ \vdots & \vdots & \vdots \\ x_M{}' & 0 & 1 \end{bmatrix} \begin{bmatrix} \omega \\ v_{x0} \\ v_{y0} \end{bmatrix} ,
$$

où $v_{D1}$ ... $v_{DN}$ sont des composantes de vitesse Doppler détectées pour chaque détection radar (12, 13), $\theta_1$... $\theta_N$ sont des angles de détection d'azimut détectés pour chaque détection radar (12, 13), $v_{y1}{}'$... $v_{yM}{}'$ sont des composantes y de vitesse déterminées pour chaque détection de caméra stéréo (12', 13'), $x_s$ est une coordonnée x de la position du système radar (3) par rapport à l'origine (xo,yo), $y_s$ est une coordonnée y de la position du système radar (3) par rapport à l'origine (xo,yo), $x_c$ est la position x de la position (xc, $y_c$) dudit dispositif de caméra stéréo (4) par rapport à l'origine (xo,yo) et $x_1{}'$... $x_M{}'$ est une coordonnée x pour chaque détection de caméra stéréo (12', 13') par rapport à l'origine (xo,yo) et $x_1{}'$... $x_M{}'$ étant chacune la somme de la distance respective mesurée par détection de caméra stéréo par le dispositif de caméra stéréo (4) en direction de l'axe x et de la position x, $x_c$, du dispositif de caméra stéréo (4), où en outre, pour l'origine (xo,yo) de l'axe x (14) et de l'axe y (15), $v_{x0}$ est la composante x de vitesse et $v_{y0}$ est la composante y de vitesse pour le vecteur de vitesse vo de l'origine (xo,yo), et $\omega$ est une vitesse angulaire de l'objet (11) par rapport à ladite origine (xo,yo), où l'état de mouvement bidimensionnel de l'objet (11) est exprimé au moyen du vecteur de vitesse vo au niveau de la position connue (xo,yo) de l'origine et de la vitesse angulaire $\omega$ correspondante de l'objet (11) autour de ladite origine (xo,yo).

2. Système de détection d'environnement de véhicule (2) selon la revendication 1, **caractérisé en ce que** le système de détection d'environnement de véhicule (2) est agencé pour intégrer ledit état de mouvement bidimensionnel au moyen d'un filtrage temporel.

3. Système de détection d'environnement de véhicule (2) selon les revendications 1 ou 2, **caractérisé en ce que** le système de détection d'environnement de véhicule (2) est agencé pour trouver le plus grand groupe de détections avec le même état de mouvement, de telle sorte que l'objet avec le nombre le plus élevé de détections est identifié au niveau d'une première évaluation, et pour exclure ces détections d'une manière répétitive de telle sorte que successivement les détections de tous les objets sont identifiées, et des détections qui n'appartiennent pas à un objet étendu, sont identifiés.

4. Système de détection d'environnement de véhicule (2) selon la revendication 1, **caractérisé en ce que** ladite unité de traitement (5) est agencée pour intégrer toutes les détections de caméra stéréo (12', 13') indépendamment des détections radar (12, 13), permettant aux détections radar (12, 13) de différer des détections de caméra stéréo (12', 13'), où le dispositif de caméra stéréo (4) est agencé pour fournir des coordonnées x ($x_1{}'$... $x_M{}'$) et des composantes y de vitesse ($v_{y1}{}'$... $v_{yM}{}'$) pour chaque détection de caméra stéréo (12', 13'), permettant à toutes les détections de caméra stéréo (12', 13') d'être intégrées dans le système d'équation linéaire.

5. Procédé de détermination d'un état de mouvement bidimensionnel d'un objet (11) détecté comprenant un vecteur de vitesse vo au niveau d'une position connue (xo,yo) d'une origine et d'une vitesse angulaire $\omega$ correspondante de l'objet (11) détecté autour de ladite origine (xo,yo) pour au moins une détection radar (12, 13) de l'objet (11) à l'extérieur d'un véhicule (1), où le procédé comprend :

(21) l'obtention d'au moins un angle de détection d'azimut ($\theta_1$, $\theta_2$) de détection radar par rapport à un axe x (14) s'étendant à partir du véhicule (1) dans sa direction de marche avant, dans lequel un axe y (15) s'étend dans une direction perpendiculaire à l'axe x formant un système de coordonnées x,y avec l'origine étant ladite origine (xo,yo) dont la position est connue ; et
(22) l'obtention d'une composante de vitesse Doppler ($v_{D1}$, $v_{D2}$) de détection radar correspondante qui est constituée par une vitesse Doppler détectée par rapport au système radar (3) ; **caractérisé en ce que** pour chacune de ladite au moins une détection radar (12, 13) le procédé comprend en outre :

(23) l'obtention d'au moins une détection de caméra stéréo (12', 13') à partir d'un dispositif de caméra stéréo (4), où une somme du nombre de détections radar (12, 13) et du nombre de détections de caméra stéréo (12', 13') est au moins trois ;

(24) la détermination de coordonnées x ($x_1$'... $x_M$') et de composantes y de vitesse ($v_{y1}$'... $v_{yM}$') pour chaque détection de caméra stéréo (12', 13') ; et

(25) la détermination d'un état de mouvement bidimensionnel d'un objet (11) détecté en résolvant le système d'équation linéaire

$$
\begin{bmatrix} v_{D1} \\ \vdots \\ v_{DN} \\ \\ v_{y1}{}' \\ \vdots \\ v_{yM}{}' \end{bmatrix} = \begin{bmatrix} x_S \sin(\theta_1) - y_S \cos(\theta_1) & \cos(\theta_1) & \sin(\theta_1) \\ \vdots & \vdots & \vdots \\ x_S \sin(\theta_N) - y_S \cos(\theta_N) & \cos(\theta_N) & \sin(\theta_N) \\ \\ x_1{}' & 0 & 1 \\ \vdots & \vdots & \vdots \\ x_M{}' & 0 & 1 \end{bmatrix} \begin{bmatrix} \omega \\ v_{x0} \\ v_{y0} \end{bmatrix} ,
$$

où $v_{D1}$ ... $v_{DN}$ sont des composantes de vitesse Doppler détectées pour chaque détection radar (12, 13), $\theta_1$... $\theta_N$ sont des angles de détection d'azimut détectés pour chaque détection radar (12, 13), $v_{y1}$'... $v_{yM}$' sont des composantes y de vitesse déterminées pour chaque détection de caméra stéréo (12', 13'), $x_s$ est une coordonnée x de la position du système radar (3) par rapport à l'origine (xo,yo), $y_s$ est une coordonnée y de la position du système radar (3) par rapport à l'origine (xo,yo), $x_c$ est la position x de la position ($x_c$, $y_c$) dudit dispositif de caméra stéréo (4) par rapport à l'origine (xo,yo) et $x_1$'... $x_M$' est une coordonnée x pour chaque détection de caméra stéréo (12', 13') par rapport à l'origine (xo,yo) et $x_1$'... $x_M$' étant chacune la somme de la distance respective mesurée par détection de caméra stéréo par le dispositif de caméra stéréo (4) en direction de l'axe x et de la position x, $x_c$, du dispositif de caméra stéréo (4), où en outre, pour l'origine (xo,yo) de l'axe x (14) et de l'axe y (15), $v_{x0}$ est la composante x de vitesse et $v_{y0}$ est la composante y de vitesse du vecteur de vitesse vo de l'origine (xo,yo), et $\omega$ est une vitesse angulaire de l'objet (11) par rapport à ladite origine (xo,yo), où l'état de mouvement bidimensionnel est exprimé au moyen dudit vecteur de vitesse vo au niveau de la position connue (xo,yo) de l'origine et de la vitesse angulaire $\omega$ correspondante de l'objet (11) autour de ladite origine (xo,yo).

6.  Procédé selon la revendication 5 **caractérisé en ce que** le procédé comprend en outre l'intégration de toutes les détections de caméra stéréo (12', 13') indépendamment des détections radar (12, 13), permettant aux détections radar (12, 13) de différer des détections de caméra stéréo (12', 13'), où le dispositif de caméra stéréo (4) est utilisé pour la fourniture de coordonnées x ($x_1$'... $x_M$') et de composantes y de vitesse ($v_{y1}$'... $v_{yM}$') pour chaque détection de caméra stéréo (12', 13'), permettant à toutes les détections de caméra stéréo (12', 13') d'être intégrées dans le système d'équation linéaire.

7.  Procédé selon l'une quelconque des revendications 5 ou 6 **caractérisé en ce que** le procédé comprend en outre :

    - le fait de trouver le plus grand groupe de détections avec le même état de mouvement, de telle sorte que l'objet avec le nombre le plus élevé de détections est identifié au niveau d'une première évaluation ;
    - l'exclusion de ces détections d'une manière répétitive de telle sorte que successivement les détections de tous les objets sont identifiées ; et
    - l'identification de détections qui n'appartiennent pas à un objet étendu.

FIG.1

FIG.2

FIG.3

Obtaining an azimuth
detection angle
— 16

Obtaining a Doppler
velocity component
— 17

Obtaining corresponding
image pixels
— 18

Determining velocity y-
component
— 19

Determining a resulting
velocity
— 20

FIG. 4

```
         23
              ┌─────────────────────┐
              │  Obtaining camera   │
              │     detections      │        ┌─────────────────────┐
              └─────────────────────┘        │ Obtaining an azimuth │      21
                         │                    │   detection angle    │
                         ▼                    └─────────────────────┘
              ┌─────────────────────┐                   │
              │ Determining x-coordinates │              ▼
              │ and velocity y-components │   ┌─────────────────────┐
              │ for each camera detection │   │ Obtaining a Doppler │      22
              └─────────────────────┘        │  velocity component │
         24                                  └─────────────────────┘
                         │                             │
                         ▼              ▼
                    ┌─────────────────────────┐
                    │   Determining a two-    │      25
                    │ dimensional motion state │
                    │     of each object      │
                    └─────────────────────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1460454 A2